# EUROPEAN PATENT APPLICATION

(11) **EP 4 321 276 A1**
(43) Date of publication of application: **14.02.2024**
(21) Application number: 22784562.5
(22) Date of filing: 28.03.2022
(51) Int. Cl.: B22D 19/00, B22F 7/08, B33Y 10/00, B23K 9/04, B22F 10/16, B22F 10/25, B22F 10/28

(54) **JOINT STRUCTURE OF DISSIMILAR METAL MATERIALS AND METHOD FOR JOINING DISSIMILAR METAL MATERIALS**

(30) Priority: 08.04.2021 JP 2021065983
(71) Applicant: Advanced Composite Corporation, Fuji-shi, Shizuoka 417-0801 (JP)
(72) Inventor: TAKAGI, Yoshio, Fuji City, Shizuoka 4170801 (JP); Khin Khin Hset, Fuji City, Shizuoka 4170801 (JP); OCHIAI, Shogo, Fuji City, Shizuoka 4170801 (JP); KITAMURA, Hitoshi, Fuji City, Shizuoka 4170801 (JP)
(74) Representative: Goddar, Heinz J.
(86) International application number: PCT/JP2022/015004
(87) International publication number: WO 2022/215578

(57) **Abstract**

A dissimilar metal joint structure (1) is mainly composed of a first joining material (3), a second joining material (5), a three-dimensional structural body (7), and the like. The three-dimensional structural body (7) is joined to the top of the first joining material (3). Spaces (9b) in the three-dimensional structural body (7) are filled with the second joining material (5), so that the second joining material (5) is geometrically integrated with the three-dimensional structural body (7). As described above, the three-dimensional structural body (7) is joined to the first joining material (3) at an interface (11). The second joining material (5) is charged into the spaces (9b) in the three-dimensional structural body (7) and is integrated with the three-dimensional structural body (7). The first joining material (3) and the second joining material (5) are joined together via the three-dimensional structural body (7). At this time, because the second joining material (5) is charged into the spaces (9b) in the three-dimensional structural body (7), the second joining material (5) and the three-dimensional structural body (7) are strongly joined and integrated together by the anchor effect. Furthermore, the bonding (tensile) strength can be increased by inducing metallurgical reaction at the interface between the first joining material and the second joining material.

## Description

### TECHNICAL FIELD OF THE INVENTION

The present invention relates to a joint structure of dissimilar metal materials and a method for joining the dissimilar metal materials.

### BACKGROUND OF THE INVENTION

The methods for joining and integrating dissimilar materials together without using mechanical joining materials, such as bolts, have been conventionally proposed. Unfortunately, in many of such known joint structures, bonding strength in the vicinity of a joint interface between the dissimilar materials has often been an issue when compared to strength of each of the joining materials to be joined, and thus the bonding strength of the joint structure of dissimilar materials is to be further increased.

An example for such methods for joining dissimilar materials is forming small uneven shapes on a surface of one of the joining materials in advance so as to increase the bonding strength by anchor effect of the uneven shapes (see Patent Documents 1 and 2, for example).

### RELATED ART

### PATENT DOCUMENTS

[Patent Document 1] Japanese Unexamined Patent Application Publication No. 2020-124910 (JP-A-2020-124910)
[Patent Document 2] Japanese Unexamined Patent Application Publication No. 2019-081191 (JP-A-2019-081191)

### SUMMARY OF THE INVENTION

### (PROBLEMS TO BE SOLVED BY THE INVENTION)

Patent Document 1 and Patent Document 2 disclose methods in which small uneven shapes are formed on a metal surface and resin is infiltrated into the uneven shapes so as to firmly join metal and resin together by the anchor effect of the uneven shapes. Such the method is effective to a certain extent when joining a metal material with a resin material. Meanwhile, when joining metal materials together, the anchor effect of the uneven shapes on the metal surface is insufficient and it is difficult to obtain the sufficient bonding strength.

The present invention was made in view of such problems. It is an object of the present invention to provide a joint structure of dissimilar metal materials and a method for joining the dissimilar metal materials in which high bonding strength can be obtained.

### (MEANS FOR SOLVING PROBLEMS)

To achieve the above object, a first aspect of the present invention is a joint structure of dissimilar metal materials. The joint structure includes a first joining material that is made of metal, a three-dimensional structural body that is made of metal, the three-dimensional structural body being joined to the first joining material and having spaces, and a second joining material that is made of metal, the second joining material being filled into the spaces of the three-dimensional structural body. The first joining material and the second joining material are joined together via the three-dimensional structural body.

An intermetallic compound is formed on an interface between the three-dimensional structural body and the second joining material, and it is preferable that, by observing cross sections, a formation growth of the intermetallic compound is between 5 % and 60 % of a length of the interface between the three-dimensional structural body and the second joining material.

It is preferable that the three-dimensional structural body includes a cross-sectional area gradation portion, in which areas of cross-sections that are parallel to an interface between the three-dimensional structural body and the first joining material decrease as being away from the first joining material.

It is preferable that the three-dimensional structural body is formed on the interface between the three-dimensional structural body and the first joining material leaving almost no gaps, and that the spaces are formed at positions that are away from the first joining material.

It is preferable that the three-dimensional structural body is in a lattice form, and that at least a part of the spaces of the three-dimensional structural body are formed not in a continuous straight line direction that is perpendicular to a joint surface with the first joining material.

In such the case, at least a part of the spaces of the three-dimensional structural body may be formed in a direction that is inclined with respect to a joining direction with the first joining material.

Alternatively, at least a part of the spaces of the three-dimensional structural body may be formed in a direction that is curved with respect to the joining direction with the first joining material.

The first aspect of the present invention can provide sufficient anchor effect by forming the three-dimensional structural body onto the first joining material and joining the second joining material with the first joining material via the metal-made three-dimensional structural body.

Furthermore, by filling the metal-made second joining material into the three-dimensional structural body by high pressure casting, it is possible to induce metallurgical reaction at the interface between the three-dimensional structural body and the second joining material, thereby increasing bonding strength. At the time of high pressure casting, metals melt completely into a liquid phase state with low viscosity compared to melted resin, for example. Thus, the second joining material can be filled, with certainty, into the three-dimensional structural body where spaces are narrow or into a large product with a long filling distance.

Also, if the three-dimensional structural body includes the cross-sectional area gradation portion in which the cross-sectional areas decrease as being away from the first joining material, the bonding strength can be further increased. Also, since an area ratio of the second joining material to the three-dimensional structural body changes gradually, local stress concentration is unlikely to occur even in an environment that receives heat cycles or repeated stress etc.

Also, the bonding strength between the three-dimensional structural body and the first joining material can be increased if the three-dimensional structural body is formed on the interface between the three-dimensional structural body and the first joining material leaving almost no gaps, and the spaces are formed at positions that are away from the first joining material.

Also, in a case in which the three-dimensional structural body is in a lattice form and the spaces are formed in a continuously straight line, such the direction may become a weak direction for the bonding strength. That is, if the forming direction of the spaces matches the continuous straight line direction that is perpendicular to the joint surface with the first joining material, the bonding strength in the joining direction between the first joining material and the second joining material may decrease. Whereas, by forming the spaces of the three-dimensional structural body in a direction that is not continuously straight and perpendicular to the joint surface with the first joining material, it is possible to further increase the bonding strength in the joining direction between the first joining material and the second joining material.

For example, it is possible to increase the bonding strength in the joining direction between the first joining material and the second joining material by forming the three-dimensional structural body such that the spaces between the lattices of the three-dimensional structural body are inclined with respect to the joining direction with the first joining material.

Also, it is possible to suppress formation of weak directions in any directions with respect to the first joining material by forming the three-dimensional structural body such that at least a part of the spaces of the three-dimensional structural body are formed being curved with respect to the joining direction with the first joining material.

A second aspect of the present invention is a method for joining dissimilar materials. The method includes a step (a) of forming a metal-made three-dimensional structural body having spaces onto a metal-made first joining material, and a step (b) of filling a metal-made second joining material into the spaces of the three-dimensional structural body by high pressure casting so as to join the first joining material with the second joining material via the three-dimensional structural body.

It is preferable that the method includes, after filling the second joining material into a metal mold and before opening the mold, a step (c) of holding the mold for a reaction layer forming holding time for forming a reaction layer on an interface between the three-dimensional structural body and the second joining material.

The three-dimensional structural body may include a cross-sectional area gradation portion, in which areas of cross-sections that are parallel to an interface between the three-dimensional structural body and the first joining material decrease as being away from the first joining material.

The three-dimensional structural body may be in a lattice form, and at least a part of the spaces of the three-dimensional structural body may not be formed in a continuous straight line direction that is perpendicular to a joint surface with the first joining material.

It is preferable that the three-dimensional structural body is formed by using a 3D printer.

The second aspect of the present invention can provide sufficient anchor effect. In addition, by filling the metal-made second joining material into the three-dimensional structural body by high pressure casting, metallurgical reaction at the interface between the three-dimensional structural body and the second joining material can be advanced, thus the bonding strength can be further increased.

Also, if the three-dimensional structural body includes the cross-sectional area gradation portion in which the cross-sectional areas decrease as being away from the first joining material, it is possible to form a cross-sectional area ratio portion, at which the bonding strength of the joint structure of the three-dimensional structural body and the second joining material is maximum. Thus, there is no need to calculate an optimum cross-sectional area ratio in advance, and the joint structure of dissimilar metals having high bonding strength can be easily obtained.

Also, by forming the spaces of the three-dimensional structural body in a direction that is not continuously straight and perpendicular to the joint surface with the first joining material, it is possible to obtain the j oint structure of dissimilar metals having the high bonding strength in the joining direction between the first joining material and the second joining material.

Also, the three-dimensional structural body is formed by using the 3D printer, and thus the three-dimensional structural body can be formed in any desired shapes with high accuracy.

### (EFFECTS OF THE INVENTION)

The present invention can provide a joint structure of dissimilar metal materials and a method for joining the dissimilar metal materials in which high bonding strength can be obtained.

### BRIEF DESCRIPTION OF DRAWINGS

FIG. 1 is a cross-sectional perspective view showing a joint structure of dissimilar metal materials 1.
FIG. 2A is a view showing a state in which a three-dimensional structural body 7 is formed.
FIG. 2B is a view showing a state in which a second joining material 5 is filled into the three-dimensional structural body 7.
FIG. 3 is a cross-sectional perspective view showing a joint structure of dissimilar metal materials 1a.
FIG. 4 is a side view showing the joint structure of dissimilar metal materials 1a (a perspective view of the second joining material 5).
FIG. 5A is a plan schematic view of the joint structure of dissimilar metal materials 1.
FIG. 5B is a cross-sectional view taken along E-E line in FIG. 5A.
FIG. 6 is a schematic view showing a positional relation between the three-dimensional structural body 7 (spaces 9b) and the second joining material 5 of the joint structure of dissimilar metal materials 1.
FIG. 7A is a cross-sectional schematic view of the joint structure of dissimilar metal materials 1a.
FIG. 7B s a schematic view showing a positional relation between the three-dimensional structural body 7a (the spaces 9b) and the second joining material 5 of the joint structure of dissimilar metal materials 1a.
FIG. 8A is a side view showing the three-dimensional structural body 7 of the joint structure of dissimilar metal materials 1 (a perspective view of the second joining material 5).
FIG. 8B is a side view showing a three-dimensional structural body 7b of a joint structure of dissimilar metal materials 1b (a perspective view of the second joining material 5).
FIG. 9 is a schematic view showing formation directions of the spaces 9b in each embodiment.
FIG. 10A is a side view showing a joint structure of dissimilar metal materials 1c (a perspective view of the second joining material 5).
FIG. 10B is a side view showing a joint structure of dissimilar metal materials 1d (a perspective view of the second joining material 5).
FIG. 11A is a cross-sectional view taken along T-T line in FIG. 10A.
FIG. 11B is a cross-sectional view taken along U-U line in FIG. 10A.
FIG. 11C is a cross-sectional view taken along V-V line in FIG. 10A.
FIG. 12 is a schematic view showing a positional relation between a three-dimensional structural body 7c (the spaces 9b) and the second joining material 5 of the joint structure of dissimilar metal materials 1c.
FIG. 13A is a side view showing a joint structure of dissimilar metal materials 1e (a perspective view of the second joining material 5).
FIG. 13B is a side view showing a joint structure of dissimilar metal materials 1f (a perspective view of the second joining material 5).
FIG. 14A is a photograph of an interface at a joint portion.
FIG. 14B is an enlarged photograph of C section in FIG. 4B.
FIG. 15 is a schematic drawing of FIG. 14B.

### DESCRIPTION OF SOME EMBODIMENTS

### (First Embodiment)

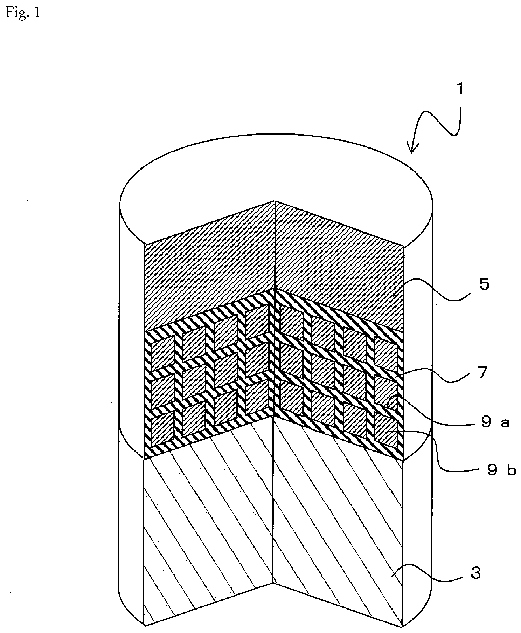

Hereinafter, some embodiments of the present invention will be described with reference to the accompanying drawings. FIG. 1 is a partial cross-sectional perspective view showing a joint structure of dissimilar metal materials 1. The joint structure of dissimilar metal materials 1 mainly includes a first joining material 3, a second joining material 5, a three-dimensional structural body 7, and so on.

The first joining material 3 is made of metal and is formed into a predetermined shape. Unlimited materials including tool steel can be used for the first joining material 3.

Unlimited methods including rolling, extrusion, casting, forging, and machining may be used for forming the first joining material 1. Also, although the joint structure of dissimilar metal materials 1 is in a column shape in the illustrated example for simplification, the joint structure of dissimilar metal materials 1 may be in any shape, and shapes of the first joining material 3, the second joining material 5, and the three-dimensional structural body 7 will be determined according to a final shape of the joint structure of dissimilar metal materials 1.

The three-dimensional structural body 7 is joined onto the first joining material 3. The three-dimensional structural body 7 is made of metal of any material, including maraging steel. The first joining material 3 and the three-dimensional structural body 7 may be made of different materials having, preferably, close thermal expansion coefficients. The three-dimensional structural body 7 is formed by using a so-called 3D printer or the like. That is, the three-dimensional structural body 7 is layered onto a surface (an interface 11) of the first joining material 3 and joined. The interface 11 is not necessarily a plane surface.

Any known methods can be used for the 3D printer. For example, a powder bed fusion method, a direct energy deposition method, or a fused deposition modeling can be applied. The powder bed fusion method is a method for distributing metal powder and selectively fusing and solidifying the metal powder by laser irradiation. The direct energy deposition method is a method in which fused metal is blown to be deposited and solidified. The fused deposition modeling is a method in which metal powder is deposited with thermoplastic resin as a binder, which is then removed to form the product. Although the method for forming the three-dimensional structural body 7 is not limited to the above, using a 3D printer allows to set a desired shape (a space ratio and an area ratio which will be described below) and to design the bonding strength.

In the present embodiment, the three-dimensional structural body 7 is in a lattice form. In the descriptions below, a body part forming the lattice of the three-dimensional structural body 7 will be called as a lattice portion 9a, and a part that is other than the lattice portions 9a and is surrounded by the lattice portions 9a is called as a space 9b. That is, the lattice form of the three-dimensional structural body 7 includes the lattice portions 9a and the spaces 9b. The lattice form is not limited to a rectangular lattice as shown in the drawing, and may be in a triangular lattice, a honeycomb-shaped lattice, or the like. Also, the three-dimensional structural body 7 is not necessarily in the lattice form and may be in any shape having at least spaces 9b connecting through to the outside. In the descriptions below, the three-dimensional structural body 7 is assumed to be in a regular lattice form.

The second joining material 5 is filled into the spaces 9b of the three-dimensional structural body 7 and is integrated with the three-dimensional structural body 7. That is, the spaces 9b are all connected through to the outside of the three-dimensional structural body 7 and cannot be independent spaces. The second joining material 5 is made of metal, such as non-iron metal (aluminum, copper, magnesium, etc.), that is different from the first j oining material 3.

As described above, the three-dimensional structural body 7 is joined with the first joining material 3 at the interface 11. Also, the second joining material 5 is filled into the spaces 9b of the three-dimensional structural body 7 to be integrated. Thus, the first joining material 3 and the second joining material 5 are joined together via the three-dimensional structural body 7. At this time, the second joining material 5 is filled into the spaces 9b of the three-dimensional structural body 7 and is firmly joined and integrated due to anchor effect. Also, the second joining material is made of metal and thus a metallurgical reaction is induced between the first joining material and the second joining material at the time of manufacturing, which allows stronger bonding.

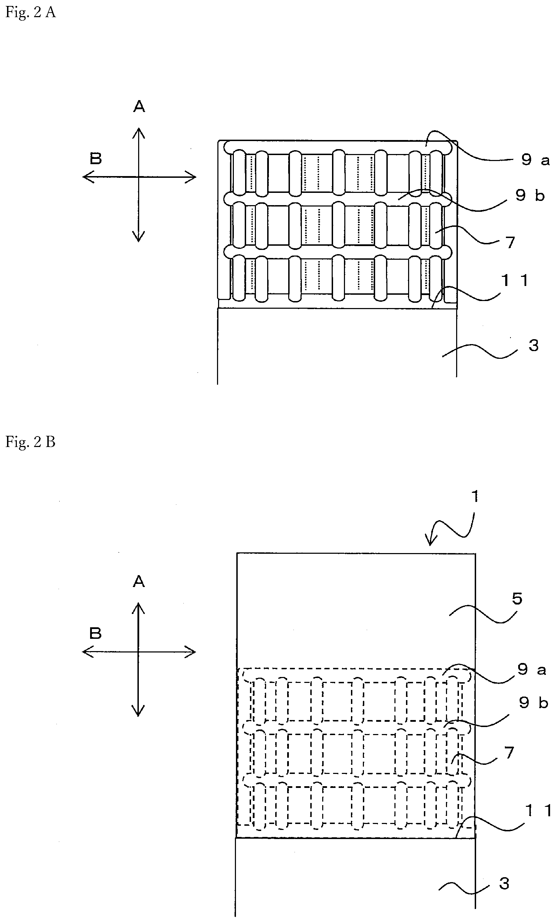

Next, a method for manufacturing the j oint structure of dissimilar metal materials 1 (a method for joining dissimilar metal materials) will be described. Firstly, as shown in FIG. 2A, the three-dimensional structural body 7 is formed on a surface of the first joining material 3 by using a 3D printer or the like. The three-dimensional structural body 7 is made of a material that is different from that of the first joining material 3. At this time, before building the three-dimensional structural body 7, the surface of the first joining material 3 (the surface that corresponds to the interface 11) may have surface treatment in advance. For example, uneven shapes or porous shapes may be formed on the surface of the first joining material 3, or the surface may have treatment for removing an oxide film or may be applied with a joining auxiliary agent (flux etc.). Also, surface treatment, such as plating or coating by PVD or CVD, may be applied if requested. For example, forming a metal layer or attaching micro metal powder that can generate or accelerate the metallurgical reaction with the second joining material 5 on surfaces of the three-dimensional structural body 7 can further increase the bonding strength.

In the present embodiment, the three-dimensional structural body 7 is formed of rectangular lattices in which the lattice portions 9a are formed in a direction A that is perpendicular to the interface 11 and in a direction B that intersects perpendicularly with the direction A (a direction perpendicular to the surface of the paper is omitted and the same applies hereinafter). The directions of the lattices will be described in detail below.

Next, as shown in FIG. 2B, the second joining material 5 is filled into the spaces 9b of the three-dimensional structural body 7. When filling the second joining material 5 into the spaces 9b of the three-dimensional structural body 7, although its illustration is omitted, a desirable metal mold or the like that is appropriate for the method is used.

Unlimited methods for filling the second joining material 5 into the spaces 9b of the three-dimensional structural body 7 include commonly known casting methods, such as squeeze casting, high pressure casting, die casting, and gravity casting. At this time, to make sure to fill the second joining material 5 into every corner of the spaces 9b and to improve quality, squeeze casting, high pressure casting, and die casting are especially favorable. Also, to obtain further stronger bonding by metallurgical reaction between the three-dimensional structural body 7 and the second joining material 5, squeeze casting and high pressure casting are most suitable because, in these methods, the interface between the second joining material 5 and the three-dimensional structural body 7 is held at a high temperature for a long time and thus the reaction can easily occur.

The formation of a reaction layer on the interface between the second joining material 5 and the three-dimensional structural body 7 is accelerated if the molten second joining material 5 and the three-dimensional structural body 7 are in close contact with each other at a high temperature for a long time. The reaction layer is an intermetallic compound formed on the interface between the second joining material 5 and the three-dimensional structural body 7. For example, if the three-dimensional structural body 7 is an iron material, such as maraging steel, and the second joining material 5 is an aluminum alloy, the reaction layer is formed of intermetallic compounds like FeAl₃ or Fe₂Al₃. Also, if the three-dimensional structural body 7 is a nickel alloy and the second joining material 5 is an aluminum alloy, the reaction layer is formed of intermetallic compounds like NiAl₃, Ni₂Al₃, NiAl, or Ni₅Al₃. It is preferable that the reaction layer is formed on the interface between the three-dimensional structural body 7 and the second joining material 5 in this way. The reaction layer (the intermetallic compound) is not limited to the above, and various intermetallic compound parts may form the reaction layer depending on metal types used for the three-dimensional structural body 7 and the second joining material 5.

Note that an intermetallic compound is usually more fragile than its base materials, and formation of coarse intermetallic compounds has been avoided in the field of metal processing (casting). However, the inventors of the present invention have found a new insight that an existence of certain amount of intermetallic compounds (a reaction layer) can actually increase bonding strength between dissimilar metals. For example, the inventors found that bonding strength of the interface changes with the size of the reaction layer and, as an amount of the reaction layer on the interface increases, the bonding strength tends to increase up to a certain degree. In more detail, by observing cross sections, the inventors found that the high bonding strength can be obtained when a formation growth of the intermetallic compound (hereinafter, referred to as a reaction layer ratio) is between 5 % and 60 % of a length of the interface between the three-dimensional structural body 7 and the second joining material 5.

If the reaction layer ratio is less than 5 %, sufficient effect of an increase in the bonding strength due to the existence of the intermetallic compound cannot be obtained. On the other hand, if the formation growth of the intermetallic compound to the length of the interface between the three-dimensional structural body 7 and the second joining material 5 is more than 60 %, as mentioned above, the strength of the material itself may decrease due to the intermetallic compound.

An example of a method for measuring the reaction layer ratio is to, firstly, select an interface range of 300 µm or more (more preferably, 500 µm or more) on a metallic optical photograph (a magnification of approximatley 100, for example) of a cross section on which the intermetallic compound can be observed. Then, a length of the intermetallic compound formed on the interface is measured with respect to the interface area (an interface length) so that the reaction layer ratio can be calculated. It is preferable to avoid parts with complex interface shapes (singular points) and to select parts that are as flat as possible and have ratios that are close to the average reaction layer ratio. Preferably, measurements are taken at three or more parts and the average ratio is calculated.

As mentioned above, the closer and the longer the molten second joining material 5 and the three-dimensional structural body 7 are in contact with each other and the higher the temperature is, the easier it is to form and grow the reaction layer. Thus, a formation state of the reaction layer can be controlled by casting conditions, such as melting temperature (liquid temperature) of the second joining material 5, time of being in contact in a molten state (solidifying time), and preheating temperature of the three-dimensional structural body 7. For example, it is preferable that, after filling the second joining material 5 into a metal mold, the mold is held for a holding time for forming the intermetallic compound on the interface between the three-dimensional structural body 7 and the second joining material 5 before opening the mold. By setting the appropriate holding time for forming the intermetallic compound, the formation growth of the intermetallic compound with respect to the length of the interface between the three-dimensional structural body 7 and the second joining material 5 can be adjusted.

Note that when casting a metal, in general, it is possible to refine crystal particles, stabilize quality, and shortens cycle time by increasing a cooling speed, thereby reducing manufacturing cost. For example, for a die casting method of aluminum, the mold is provided with multiple inner cooling mechanisms and a mold temperature at the start of casting is low. For this reason, the solidifying time is extremely short as several seconds or several tens of seconds, or less than one minute even for a large-sized product, and thus the reaction layer is unlikely to be formed. Also, although the solidifying time is longer - approximately ten minutes - in the gravity mold casting or in low pressure casting, a casting pressure is low as 0.1 MPa and the liquid metal cannot be in close enough contact with the three-dimensional structural body 7, and thus the reaction layer is unlikely to be formed.

On the other hand, in squeeze casting or in high pressure casting, the time of being in contact in the molten state (the solidifying time) is longer and the casting pressure is as high as 100 MPa. Thus, it is possible to keep pressuring the liquid metal to the three-dimensional structural body 7 so as to be in close contact with each other, and thus the reaction layer can be easily formed. Thus, molten metal die casting and high pressure casting are preferable casting methods. As above, the desirable intermetallic compound can be obtained by filling the liquid metal at a high pressure (50 MPa or more, for example, or preferably 80 MPa or more) and by keeping the mold for a longer holding time before opening the mold (at least one minute or more, preferably two minutes or more, and furthermore preferably four minutes or more).

The surface of the three-dimensional structural body 7 may be treated as mentioned above before filling the second joining material 5 into the three-dimensional structural body 7. The three-dimensional structural body 7 may also be heat treated for stress relieving or thermal refining after being formed. In this way, the j oint structure of dissimilar metal materials 1 can be obtained.

As described above, according to the first embodiment of the present invention, the first joining material 3 and the second joining material 5 are joined via the three-dimensional structural body 7 so that the two materials can be joined together firmly. If the second joining material 5 is formed directly onto the surface of the first joining material 3 by casting or the like, for example, the bonding strength at the interface 11 between the two materials may not be strong enough. Even in such the case, the two materials can be joined with high bonding strength by integrating the three-dimensional structural body 7 that is joined to the first joining material 3 with the second joining material 5. That is, the present embodiment is effective when the bonding strength between the first joining material 3 and the three-dimensional structural body 7 is higher than the bonding strength between the first joining material 3 and the second joining material.

Also, the bonding strength between the three-dimensional structural body 7 and the second joining material 5 can be adjusted by changing the shape of the three-dimensional structural body 7 (shapes and volume ratio of each of the lattice portions 9a and the spaces 9b). At this time, by building the three-dimensional structural body 7 using a 3D printer, the three-dimensional structural body 7can be designed into any shape. Thus, by designing the three-dimensional structural body 7 into a desirable shape depending on the materials of the three-dimensional structural body 7 and second joining material 5, the sufficient bonding strength can be obtained.

Also, the three-dimensional structural body 7 is disposed not only in the proximity of the interface between the three-dimensional structural body 7 and the first joining material 3 but also within the second joining material 5. For this reason, the three-dimensional structural body 7 can alleviate influence of differences in mechanical properties, such as rigidity and hardness, or thermal expansion coefficients, of the first joining material 3 and the second joining material 5. By appropriately designing the shape and structure of the three-dimensional structural body 7 and a filling depth of the second joining material 5, for example, breaking at the interface 11 can be prevented and mechanical and thermal properties of the joint structure of dissimilar metal materials 1 can be designed and controlled freely.

Also, by forming the reaction layer at the interface between the three-dimensional structural body 7 and the second joining material 5, further higher bonding strength can be obtained.

### (Second Embodiment)

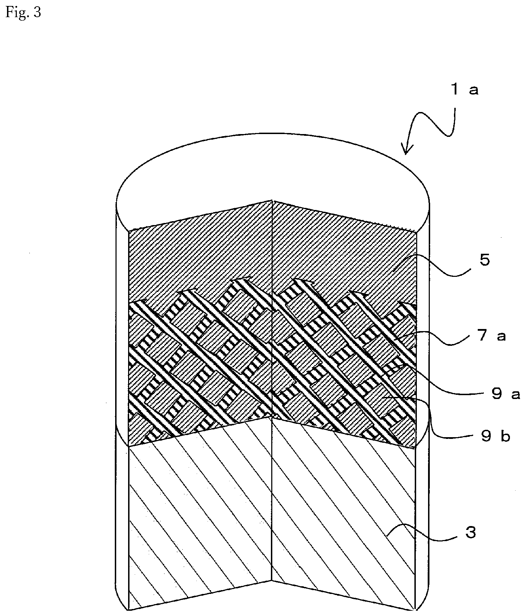

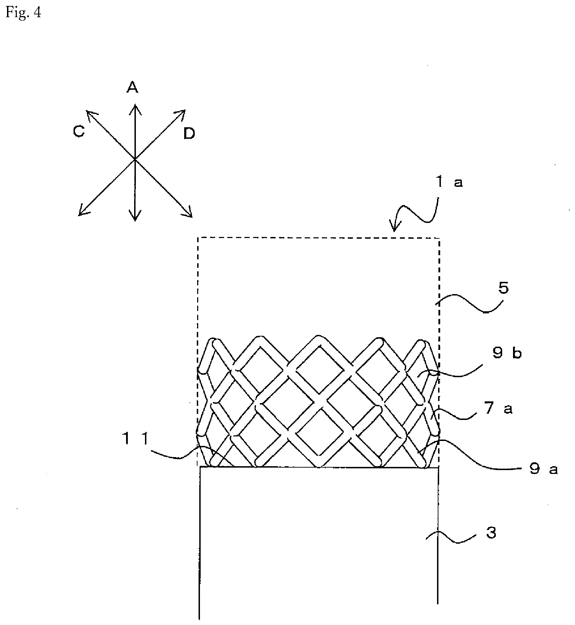

Next, a second embodiment of the present invention will be described. FIG. 3 is a partial cross-sectional perspective view showing a joint structure of dissimilar metal materials 1a according to the second embodiment, and FIG. 4 is a side view of the joint structure of dissimilar metal materials 1a (a perspective view of the second joining material 5). In the descriptions hereinafter, the structures having the same functions as in the first embodiment will have the same notations as in FIG. 1 to FIG. 2B and redundant descriptions will be omitted.

The joint structure of dissimilar metal materials 1a has almost the same structure as the joint structure of dissimilar metal materials 1 except that a three-dimensional structural body 7a is used. Similarly to the three-dimensional structural body 7, the three-dimensional structural body 7a is in a lattice form, though the lattices are formed in different directions. As described above, in the first embodiment, the lattice portions 9a of the three-dimensional structural body 7 are formed in the direction A, which is perpendicular to the interface 11 between the three-dimensional structural body 7 and the first joining material 3, and in the direction B, which is perpendicular to the direction A (see FIG. 2A).

On the other hand, in the second embodiment, the lattice portions 9a of the three-dimensional structural body 7a are formed in directions C and D that are inclined with respect to the direction A that is perpendicular to the interface 11 between the three-dimensional structural body 7a and the first joining material 3 (the direction perpendicular to the paper surface is omitted) (see FIG. 4).

Here, in a case of the rectangular lattices, an interior of a unit cube that is formed by the lattice portions 9a forming the lattices is the space 9b. Thus, the spaces 9b are successive cubes extending in a successive direction. That is, the successive extension direction of the spaces 9b corresponds with either of axial directions of the lattice portions 9a.

In the present embodiment, the successive direction of basic unit structures of the lattice (the axial direction of the lattice portion 9a) is a formation direction of the lattice, and the successive direction of the spaces 9b, which is generated thereby, is to be a formation direction of the spaces 9b. That is, in the lattice-shaped three-dimensional structural body 7a, the formation direction of at least a part of the spaces 9b is not in a continuous straight line direction that is perpendicular to the interface 11 between the three-dimensional structural body 7a and the first joining material 3 (a joining direction between the first joining material 3 and the second joining material 5, i.e. A in the drawing) but is inclined with respect to the direction perpendicular to the interface 11 (i.e. not at an angle of 0° or 90°).

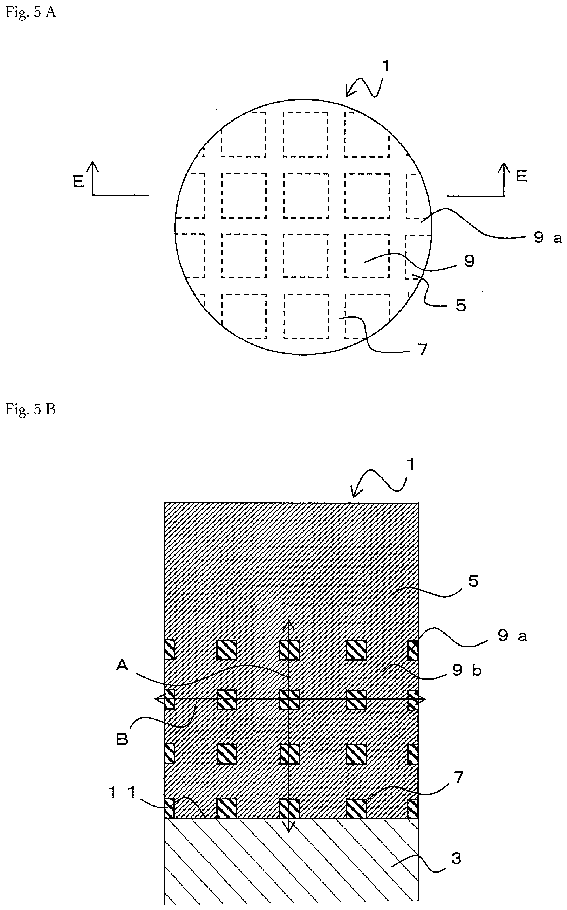

Next, effect of the inclined formation direction of the lattice will be described. First, for comparison, the joint structure for dissimilar metal materials 1 according to the first embodiment will be described. FIG. 5A is a plane schematic view of the joint structure for dissimilar metal materials 1, and FIG. 5B is a cross-sectional view taken along E-E line in FIG. 5A. In the descriptions hereinafter, layout of the lattice form will be outlined for simplification, and the cross-sectional shapes of the lattice portions 9a will be illustrated in rectangular shapes to clarify the direction of the lattice portions 9a.

As shown in FIG. 5B, on a cross section that is perpendicular to the axial direction of the lattice portions 9a, the lattice portions 9a are arranged side by side in the joining direction A of the first joining material 3 and the second joining material 5, and in the direction B that is perpendicular to the direction A. At this time, as mentioned above, the formation direction of the spaces 9b is also in the joining direction A of the first joining material 3 and the second joining material 5, and in the direction B that is perpendicular to the direction A.

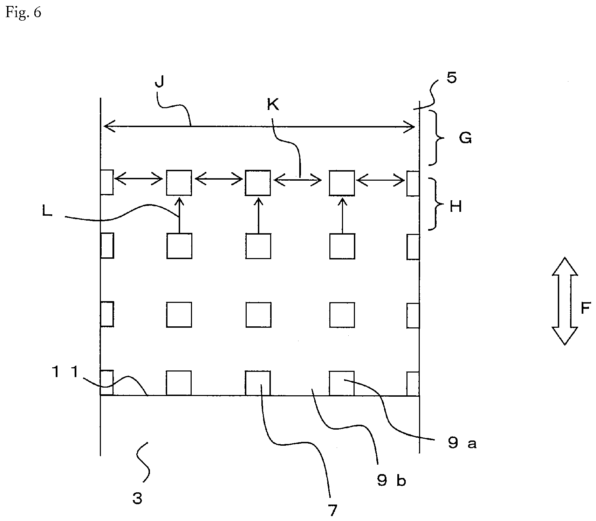

FIG. 6 is a schematic view showing a position relation between the lattice portions 9a and the second joining material 5 that is filled into the spaces 9b. Here, a case in which a load F is applied in the joining direction of the first joining material 3 and the second joining material 5 (the direction perpendicular to the interface 11) is to be examined.

If the above-mentioned reaction layer is not formed sufficiently at this time, the bonding strength at contacting interfaces between the three-dimensional structural body 7 and the second joining material 5 is small. Thus, apart from the bonding strength at the contacting interfaces between the three-dimensional structural body 7 and the second joining material 5, it can be considered that the bonding strength between the three-dimensional structural body 7 and the second joining material 5 can be obtained mainly from tensile strength of each member of the three-dimensional structural body 7 and the second joining material 5 and the anchor effect due to integration of the second joining material 5 with three-dimensional structural body 7. Also, for the second joining material 5, a material having a melting point lower than that of the first joining material 3 or the three-dimensional structural body 7 is usually chosen to facilitate filling into the spaces 9b of the three-dimensional structural body 7. Thus, in general, the second joining material 5 is made of a material with a lower strength than the first joining material 3 or the three-dimensional structural body 7.

As illustrated in the drawing, at an upper part of the three-dimensional structural body 7 (a range G in the drawing), there is only the second joining material 5 and thus the bonding strength is only by the tensile strength of the second joining material 5. For this reason, for the material for the second joining material 5, it is necessary to select a material having a strength that is required for the joint structure for dissimilar metal materials 1.

On the other hand, at a part intersecting with the three-dimensional structural body 7 (a range H in the drawing), because of the lattice portions 9a, the second joining material 5 has a smaller cross-sectional area (the sum of K in the drawing) than in the range G (J in the drawing). Meanwhile, at a lower part of the lattice portions 9a, the anchor effect (L in the drawing) is expected. Thus, at parts below the range H in the drawing, shearing force contributes between the lattice portions 9a due to the anchor effect and thus the bonding strength can be increased.

As above, for the bonding strength between the first joining material 3 and the second joining material 5, designing the cross-sectional area of the second joining material 5 (i.e. the cross-sectional areas of the spaces 9b on a cross section parallel to the interface 11) and the shearing force by the lattice portions 9a (the anchor effect) is important.

Here, in the example shown in FIG. 6, the lattice portions 9a are arranged in a continuous straight line substantially perpendicularly to the interface 11. That is, the formation direction of the spaces 9b and the lattice portions 9a are in a continuous straight line substantially perpendicularly to the interface 11. In such the case, the cross-sectional area K between the lattice portions 9a is repeated in the continuous straight line substantially perpendicularly to the interface 11. In such the case, it is difficult to efficiently obtain the anchor effect at each layer in a depth direction of the three-dimensional structural body 7.

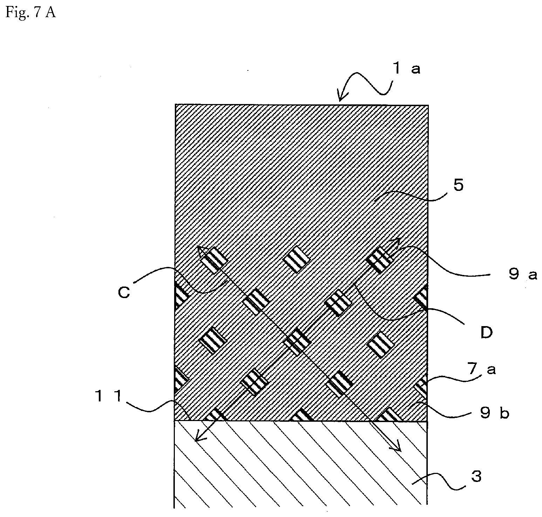

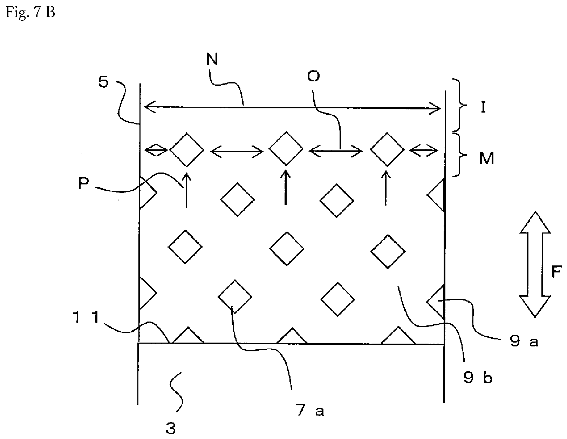

FIG. 7A and FIG. 7B are views showing the joint structure for dissimilar metal materials 1a according to the second embodiment. FIG. 7A corresponds to FIG. 5B and FIG. 7B corresponds to FIG. 6. With respect to the first embodiment, in the second embodiment, as shown in the drawings, the formation direction of the lattice portions 9a (the spaces 9b) is inclined (at an angle of 45° in the illustrated example) with respect to the direction perpendicular to the interface 11.

As shown in FIG. 7B, in the three-dimensional structural body 7a of the joint structure for dissimilar metal materials 1a, a cross-sectional area N of the second joining material 5 determines breaking strength within a range I, which is similar to the case of the three-dimensional structural body 7 of the j oint structure for dissimilar metal materials 1. Also, within or below a range M, in addition to breaking strength due to a cross-sectional area O, effect of an increase in the breaking strength due to an anchor effect P can also be obtained.

Here, even though the three-dimensional structural body 7 and the three-dimensional structural body 7a have the same lattice intervals, in the three-dimensional structural body 7a, the lattices are arranged being inclined and thus it is possible to increase the cross-sectional area O of the second joining material 5 on the cross section perpendicular to the interface 11 compared to the three-dimensional structural body 7. Also, since the spaces 9b (i.e. the minimum cross-sectional area O) are not formed in the direction that is perpendicular to the interface 11 in the continuous straight line, the anchor effect can be obtained more efficiently at each layer in the depth direction of the three-dimensional structural body 7. Thus, the bonding strength between the first joining material 3 and the second joining material 5 can be increased.

According to the second embodiment, the same effects as in the first embodiment can be obtained. Also, the forming direction of the spaces 9b of the three-dimensional structural body 7a is inclined with respect to the joining direction with the first joining material 3 (the direction perpendicular to the interface 11), thereby more efficiently providing the anchor effect against the tensile load applied in such direction.

### (Third Embodiment)

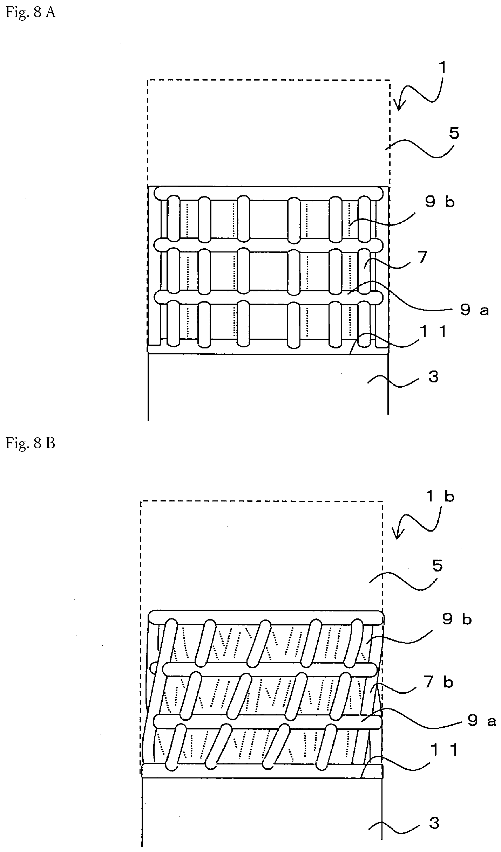

Next, a third embodiment of the present invention will be described. FIG. 8A is for a comparison and is a side view showing the joint structure for dissimilar metal materials 1 according to the first embodiment (a perspective view of the second joining material 5), and FIG. 8B is a side view showing a joint structure for dissimilar metal materials 1b according to the present embodiment (a perspective view of the second joining material 5).

The joint structure for dissimilar metal materials 1b has approximately the same structure as the joint structure for dissimilar metal materials 1 except that a three-dimensional structural body 7b is used. The three-dimensional structural body 7b is in a shape such that the lattice portions 9a (the spaces 9b) of the three-dimensional structural body 7, for example, are twisted with a center line, which is perpendicular to the interface 11, as a rotational center.

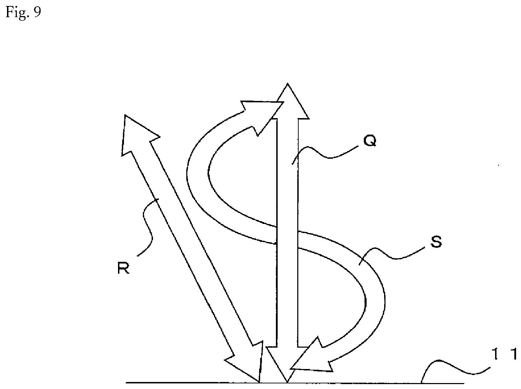

FIG. 9 is a schematic view showing the forming direction of the lattice the forming direction of (the spaces 9b) of each of the three-dimensional structural body 7, 7a, and 7b. As mentioned above, in the three-dimensional structural body 7, the forming direction of the spaces 9b is in the continuous straight line direction that is perpendicular to the interface 11 (Q in the drawing).

On the other hand, as mentioned above, in the three-dimensional structural body 7a according to the second embodiment, the forming direction of the spaces 9b is in the continuous straight line direction that is inclined with respect to a direction that is perpendicular to the interface 11 (R in the drawing). As above, in the three-dimensional structural body 7a, by making the forming direction of the spaces 9b incline to the joining direction with the first joining material 3, the anchor effect against the load applied in the joining direction with the first joining material 3 can be displayed more efficiently. However, the spaces 9b are still formed in the continuous straight line, and the similar problems may occur as in the three-dimensional structural body 7 if the load is applied in a direction parallel to the forming direction of the spaces 9b.

In contrast, in the three-dimensional structural body 7b according to the present embodiment, the forming direction of the spaces 9b is in a spiral shape with an axis perpendicular to the interface 11 as a rotation center (S in the drawing). That is, in the joint structure of dissimilar materials 1b, the forming direction of the spaces 9b of the three-dimensional structural body 7b is curved with respect to the joining direction with the first joining material 3. When the lattice is formed in the spiral shape in this way, apart of the spaces 9b are not formed in the continuous straight line, and, as a result, the anchor effect can be displayed efficiently in any directions.

The lattice form is not necessarily limited to the spiral twisted shape, and any shapes with the curved forming direction of the spaces 9b may be used. Also, although there may be some parts left where the spaces 9b are formed in the continuous straight line at the rotation center of the interface 11, the effects of the present embodiment can be obtained when at least a part of the forming direction of the spaces 9b is curved with respect to the joining direction with the first joining material 3.

According to the third embodiment, the same effects as in the first embodiment and so on can be obtained. Also, by curving the forming direction of the spaces 9b of the three-dimensional structural body 7b, the anchor effect against tensile load applied in any direction can be more efficiently obtained.

### (Fourth Embodiment)

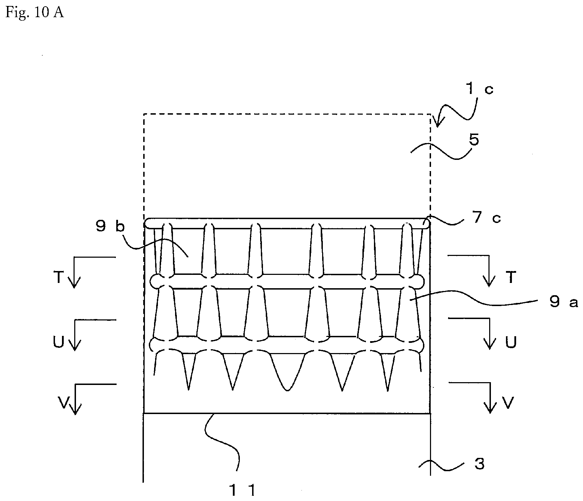

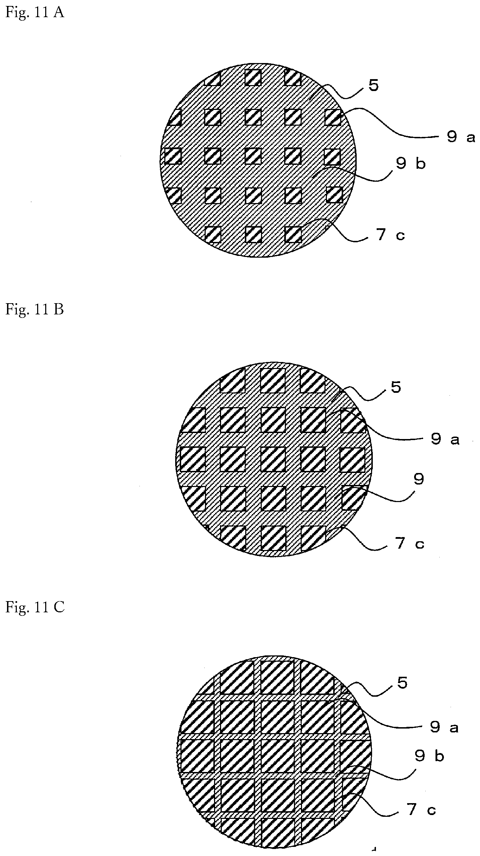

Next, a fourth embodiment of the present invention will be described. FIG. 10A is a side view showing a joint structure of dissimilar metal materials 1c according to the fourth embodiment (a perspective view of the second joining material 5), FIG. 11A is a cross-sectional view taken along T-T line in FIG. 10A, FIG. 11B is a cross-sectional view taken along U-U line in FIG. 10A, and FIG. 11C is a cross-sectional view taken along V-V line in FIG. 10A.

The joint structure for dissimilar metal materials 1c has approximately the same structure as the joint structure for dissimilar metal materials 1 except that a three-dimensional structural body 7c is used. The three-dimensional structural body 7c includes substantially rectangular lattices of which parts of the lattice portions 9a have different thicknesses. In more detail, the three-dimensional structural body 7c has a cross-sectional area gradation portion, in which areas of cross-sections (cross-sectional areas of the lattice portions 9a, the same applies hereafter) that are parallel to the interface 11 decrease as being away from the first joining material 3. That is, in the three-dimensional structural body 7c, as being away from the first joining material 3, cross-sectional areas of the cross sections of the lattice portions 9a, which are parallel to the interface 11, decrease and the cross-sectional areas of the spaces 9b increase.

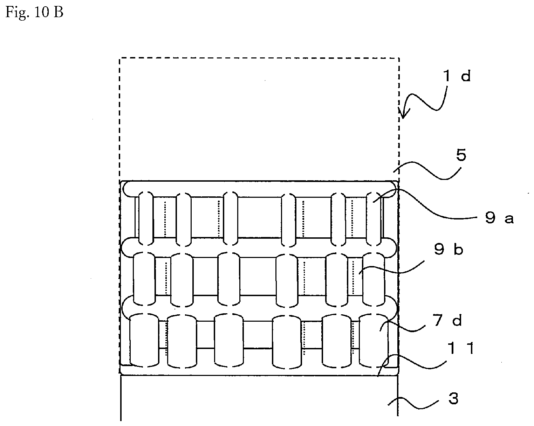

Here, the cross-sectional area gradation portion is not necessarily limited to parts in which the cross-sectional areas change continuously. For example, instead of gradually changing thickness, the thickness of the lattice portion 9a may change stepwisely as in a three-dimensional structural body 7d of a joint structure of dissimilar materials 1d as shown in FIG. 10B. The cross-sectional areas of the lattice portions 9a forming the lattice may change step-by-step in this way. That is, the cross-sectional areas may change continuously or intermittently in the cross-sectional area gradation portion, and the cross-sectional area gradation portion is to be formed so that, when average cross-sectional areas are calculated at predetermined intervals, the average cross-sectional areas in predetermined ranges decrease as being away from the first joining material 3.

At this time, it is preferable that the lattice portions 9a of the three-dimensional structural body 7c or 7d have the cross-sectional areas of predetermined value or more at the interface 11 between the three-dimensional structural body 7c or 7d and the first joining material 3. For example, at the interface 11, it is preferable that the cross-sectional areas of the lattice portions 9a occupy 80 % or more of the total cross-sectional area (the sum of the lattice portions 9a and the spaces 9b), and it is more preferable if there are no spaces 9b at the interface 11 (i.e. the cross-sectional areas of the lattice portions 9a occupy 100 %). In such the case, the spaces 9b are formed at positions away from the first joining material 3. It is also preferable that the cross-sectional area (the cross-sectional areas of the lattice portions 9a) at the top of the three-dimensional structural body 7c or 7d is 30 % or less. This can provide effects of changing the cross-sectional area with certainty.

As mentioned above, the bonding strength between the second joining material 5 and the first joining material 3 is small at their contacting portion. Thus, the contact between the second joining material 5 and the first joining material 3 at the interface 11 hardly affects the bonding strength. On the other hand, the bonding strength between the three-dimensional structural body 7c or 7d and the first joining material 3 increases if a joining area of the two is large at the interface 11. Thus, it is preferable that three-dimensional structural body 7c or 7d is formed on the interface 11 between the three-dimensional structural body 7c or 7d and the first joining material 3 with substantially no gaps.

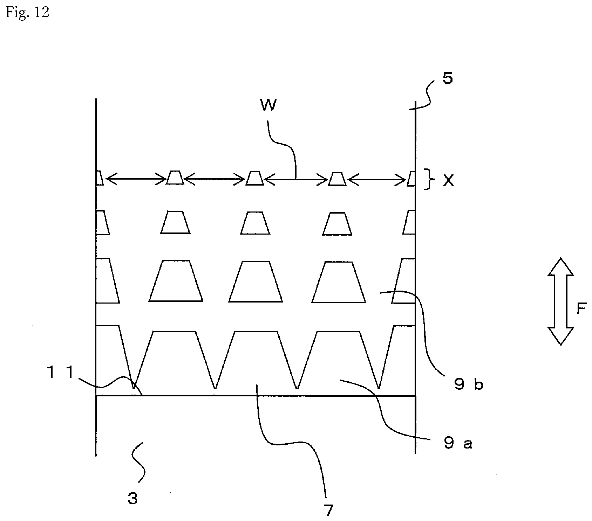

FIG. 12 is a schematic view showing a positional relation between the lattice portions 9a and the second joining material 5 of the joint structure of dissimilar metal materials 1c. As mentioned above, the breaking strength of the second joining material 5 depends on the cross-sectional area of the second joining material 5 (a cross-sectional area parallel to the interface 11). However, within a range X, since the cross-sectional areas of the lattice portions 9a are small, the cross-sectional area of the second joining material 5 is larger. This can suppress a decline of the bonding strength in the range X. On the other hand, at deeper parts than the range X, although the cross-sectional area of the second joining material 5 gradually decreases, the anchor effect by the lattice portions 9a (the shearing force) increases, and thereby ensuring the sufficient bonding strength.

Also, a ratio of the cross-sectional areas of the second joining material 5 to the lattice portions 9a gradually changes, and thus local thermal stress due to a difference in thermal expansion coefficients between the second joining material 5 and the lattice portions 9a, for example, can be suppressed and dispersed. Also, the flexible bending deformation of joining portions by the three-dimensional structural body can disperse mechanical stress, thereby increasing fatigue strength. Thus, reliability of joining materials can be further improved.

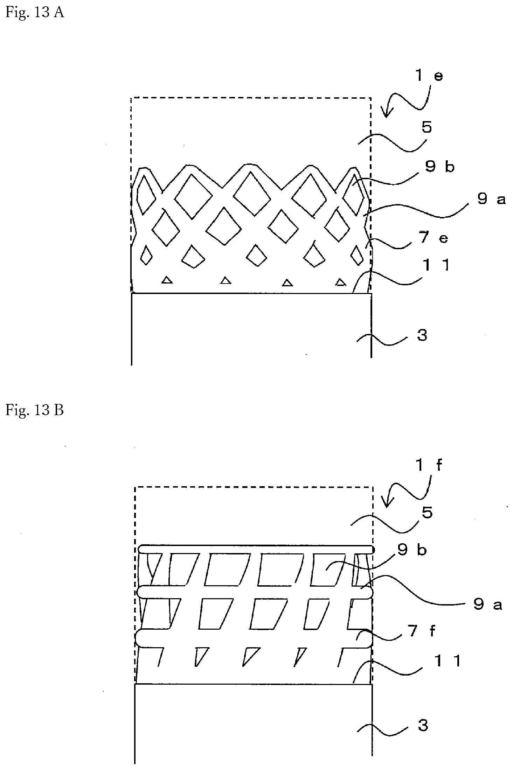

The form for forming such the cross-sectional area gradation portion may be expressed as a joint structure for dissimilar metal materials 1e as shown in FIG. 13A or as a joint structure for dissimilar metal materials 1f as shown in FIG. 13B. Similarly to the three-dimensional structural body 7a of the joint structure for dissimilar metal materials 1a, a three-dimensional structural body 7e of the joint structure for dissimilar metal materials 1e also includes the lattice portions 9a (the spaces 9b) formed in the forming direction that is inclined with respect to the direction perpendicular to the interface 11. Furthermore, the three-dimensional structural body 7e of the joint structure for dissimilar metal materials 1e includes the cross-sectional area gradation portion in which the cross-sectional areas of the cross sections that are parallel to the interface 11 decrease as being away from the first joining material 3. This can provide both the effect of forming the inclined lattice portions 9a (the spaces 9b) and the effect of forming the cross-sectional area gradation portion.

Also, similarly to the three-dimensional structural body 7b of the joint structure for dissimilar metal materials 1b, a three-dimensional structural body 7f of the joint structure for dissimilar metal materials 1f is formed into a spiral shape in which the lattices are twisted with the curved lattice portions 9a (the spaces 9b). Furthermore, the three-dimensional structural body 7f includes the cross-sectional area gradation portion in which the cross-sectional areas of the cross sections that are parallel to the interface 11 decrease as being away from the first joining material 3. This can provide both the effect of curving the lattice portions 9a (the spaces 9b) and the effect of forming the cross-sectional area gradation portion. Note that the shape of the three-dimensional structural body is not particularly limited to a lattice form, and any shape having the cross-sectional area gradation portion in which the cross-sectional areas of the cross sections that are parallel to the interface 11 decrease as being away from the first joining material 3 may be used.

According to the fourth embodiment, the same effects as in the first embodiment can be obtained. Also, since the three-dimensional structural body includes the cross-sectional area gradation portion in which the cross-sectional areas decrease as being away from the first joining material 3, the bonding strength can be increased. Also, since the ratio of the area of the second joining material 5 to the area of the three-dimensional structural body changes gradually, local concentration of stress is unlikely to occur even under an environment receiving thermal cycles or the like. Also, the flexible bending deformation of joining portions by the three-dimensional structural body can disperse mechanical stress, thereby increasing fatigue strength. Also, since the three-dimensional structural body 7 includes the cross-sectional area gradation portion in which the cross-sectional areas decrease as being away from the first joining material 3, it is possible to form a cross-sectional area ratio portion, at which the bonding strength is maximum in a joint structure of the three-dimensional structural body 7 and the second joining material 5. Thus, there is no need to calculate and set an optimum cross-sectional area ratio in advance, and a joint structure of dissimilar metals having high bonding strength can be easily obtained.

### WORKING EXAMPLES

Firstly, generated forms of the reaction layer (the intermetallic compound) under various casting conditions are evaluated. For the evaluation, a round rod material of DH2F (free-cutting hot tool steel) having a diameter of 25 mm and a length of 105 mm is used as the first joining material. Maraging steel powder (powder diameter of 10 - 30 µm) is melted by laser and laminated onto an end face of the first joining material using a metal 3D additive machine (powder bed type by Concept Laser) to form the three-dimensional structural body having a height of 10 mm as shown in FIG. 2A (the first embodiment). The cross-sectional area (the cross-sectional area of the lattice portion that is parallel to the interface) of each part is 45 % and constant. That is, the ratios of cross-sectional areas of the lattice portions formed by the maraging steel and the spaces are the same, and the three-dimensional structural body in which the spaces extend in a direction perpendicular to the end face of the first joining material is formed.

The first joining material and the three-dimensional structural body are preheated at various temperatures for two hours inside a furnace and then disposed in a metal mold. As the second joining material, an aluminum alloy (A2017) is melted at a predetermined temperature and poured and impregnated into the spaces of the three-dimensional structural body at a casting pressure of 100 MPa with various solidification holding time (time from pouring of the molten metal until opening of the mold) by high pressure casting. The obtained joint structure of dissimilar materials is then T4 heat treated (melting process at 500 °C for 4 hours → water quenching → natural ageing). Then, generation of the reaction layer on the interface between the three-dimensional structural body and the second joining material is observed.

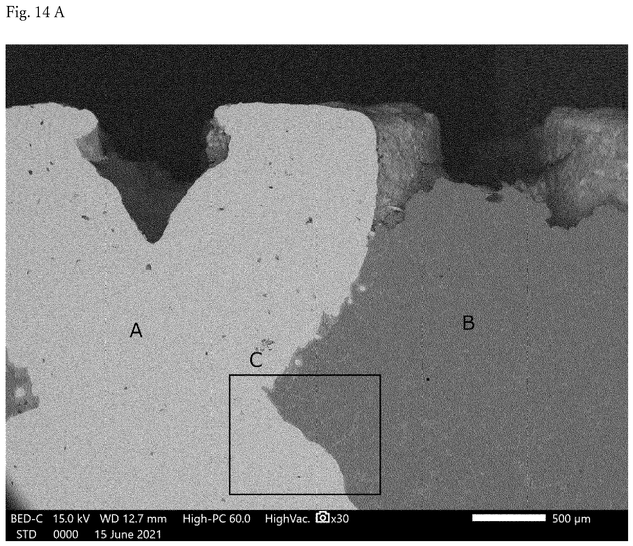

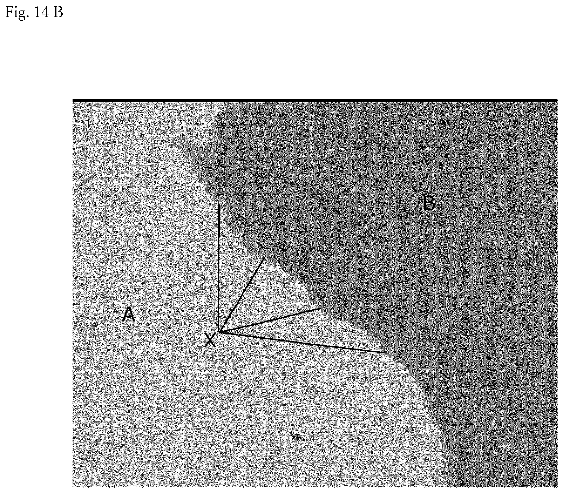

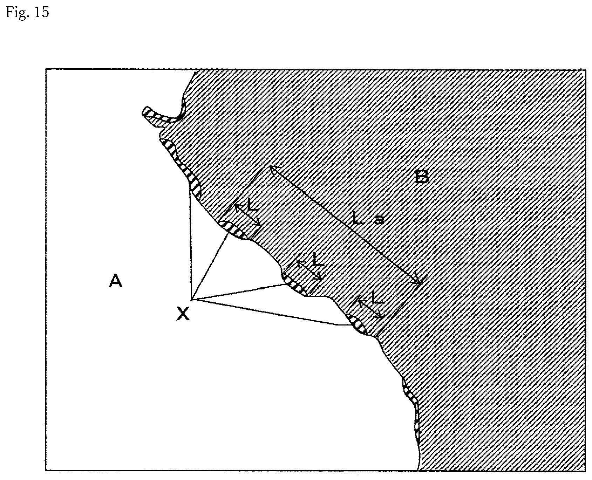

FIG. 14A is a view showing an example of the observed cross sections, and FIG. 14B is an enlarged view of C section in FIG. 14A. In FIG. 14A and 14B, A section corresponds to the three-dimensional structural body, and B section corresponds to the second joining material. Also, X section corresponds to the reaction layer in FIG. 14B. FIG. 15 is a schematic view of FIG. 14B.

The reaction layers are analyzed for their elemental composition and iron (Fe) of 10 mass% or more is detected. This is much higher than the compositional standard of Fe in A2017 aluminum alloy (0.7 mass% or less) of the second joining material. Thus, it is found that the reaction layers are intermetallic compounds formed by metallurgical reaction between the three-dimensional structural body (maraging steel) and the A2017 aluminum alloy of the second joining material.

Next, a border length La is set on the cross section and a sum of lengths of the intermetallic compounds within the border length is calculated. The results measured in FIG. 14B are: the measurement length = 390 µm; the total length of the intermetallic compound = 230 µm; and thus the reaction layer ratio is 59 %. Such measurement is carried out at randomly-selected thirty locations and the reaction layer ratio is calculated as the total sum of Lb / the border length La ×100 %.

The reaction layer ratio of more than 60 % was not found within the test range. Thus, various conditions are evaluated by using the evaluation criteria shown in Table 1 below. Also, the evaluation results are shown in Table 2 and Table 3.

**[Table 1]**

| Reaction Layer Ratio | Evaluation |
|---|---|
| 30% or more | excellent |
| 10% or more and less than 30% | good |
| 5% or more and less than 10% | average |
| 5% or less | bad |

**[Table 2]**

| Solidification Holding Time | | 30 sec. | 1 min. | 2 min. | 4 min. | 6 min. |
|---|---|---|---|---|---|---|
| Molten Metal Temperatur e (°C) | 800 | bad | average | good | excellent | excellent |
| | 770 | bad | average | good | good | excellent |
| | 740 | bad | average | average | good | excellent |
| | 710 | bad | bad | average | good | good |
| | 680 | bad | bad | average | average | good |
| | 650 | bad | bad | bad | average | good |
| | 620 | bad | bad | bad | average | good |
| | 590 | bad | bad | bad | bad | average |
| | 560 | bad | bad | bad | bad | bad |

**[Table 3]**

| Solidification Holding Time | | 30 sec. | 1 min. | 2 min. | 4 min. | 6 min. |
|---|---|---|---|---|---|---|
| Molten Metal Temperatur e (°C) | 800 | bad | average | average | good | excellent |
| | 770 | bad | bad | average | average | good |
| | 740 | bad | bad | average | average | good |
| | 710 | bad | bad | bad | average | good |
| | 680 | bad | bad | bad | average | average |
| | 650 | bad | bad | bad | bad | average |
| | 620 | bad | bad | bad | bad | bad |
| | 590 | bad | bad | bad | bad | bad |
| | 560 | bad | bad | bad | bad | bad |

Table 2 shows the results obtained with the preheating temperature of 450 °C, and Table 3 shows the results obtained with the preheating temperature of 350 °C. From the results, no sufficient intermetallic compound was produced under either condition with the holding time of 30 seconds. Also, the better results were obtained with the higher preheating and metal melting temperatures and with the longer solidification holding time. If the holding time is too long, the cycle time increases, thereby reducing productivity. Also, if an amount of production of the intermetallic compound is too much, influence due to decrease in the strength of the material may increase. Thus, the solidification holding time is preferably ten minutes or less.

Next, the first joining material and the second joining material are joined by different joint structures and their bonding strengths (tensile strengths) are evaluated.

### (Working Example 1)

A round rod material of DH2F (free-cutting hot tool steel) having a diameter of 25 mm and a length of 105 mm is used as the first joining material. Maraging steel powder (powder diameter of 10 - 30 µm) is melted by laser and laminated onto an end face of the first joining material using a metal 3D additive machine (powder bed type by Concept Laser) to form the three-dimensional structural body having a height of 10 mm as shown in FIG. 2A (the first embodiment). The cross-sectional area (the cross-sectional area of the lattice portion that is parallel to the interface) of each part is 45 % and constant. That is, the ratios of cross-sectional areas of the lattice portions formed by the maraging steel and the spaces are the same, and the three-dimensional structural body in which the spaces extend in a direction perpendicular to the end face of the first joining material is formed.

The first joining material and the three-dimensional structural body are preheated at 450 °C for two hours inside a furnace and then disposed in a metal mold. As the second joining material, an aluminum alloy (A2017) is melted at 800 °C and poured and impregnated into the spaces of the three-dimensional structural body at a casting pressure of 100 MPa with solidification holding time (time from pouring of the molten metal until opening of the mold) of 8 minutes by high pressure casting. The obtained joint structure of dissimilar materials is then T4 heat treated (melting process at 500 °C for 4 hours → water quenching → natural ageing). Then, a tensile test piece (having a diameter of 20 mm) is manufactured and its tensile strength is measured.

### (Working Example 2)

A round rod material of SKD61 (hot tool steel) having a diameter of 25 mm and a length of 105 mm is used as the first joining material. Maraging steel powder (powder diameter of 10 - 30 µm) is melted by laser and laminated onto an end face of the first joining material using a metal 3D additive machine (powder bed type by Concept Laser) to form the three-dimensional structural body having a height of 10 mm as shown in FIG. 4 (the second embodiment). The cross-sectional area (the cross-sectional area of the lattice portion that is parallel to the interface) of each part is 50 % and constant. That is, the ratios of cross-sectional areas of the lattice portions formed by the maraging steel and the spaces are the same, and the three-dimensional structural body in which the spaces extend in a direction that is inclined with respect to the end face of the first joining material is formed.

The first joining material and the three-dimensional structural body are preheated at 450 °C for two hours inside a furnace and then disposed in a metal mold. As the second joining material, an aluminum alloy (A2017) is melted at 800 °C and poured and impregnated into the spaces of the three-dimensional structural body at a casting pressure of 100 MPa with solidification holding time of 8 minutes by high pressure casting. The obtained joint structure of dissimilar materials is then T4 heat treated (melting process at 500 °C for 4 hours → water quenching ---7 natural ageing). Then, a tensile test piece (having a diameter of 20 mm) is manufactured and its tensile strength is measured.

### (Working Example 3)

A round rod material of DH2F (free-cutting hot tool steel) having a diameter of 25 mm and a length of 105 mm is used as the first joining material. Maraging steel powder (powder diameter of 10 - 30 µm) is melted by laser and laminated onto an end face of the first joining material using a metal 3D additive machine (powder bed type by EOS) to form the three-dimensional structural body having a height of 10 mm as shown in FIG. 8B (the third embodiment). The cross-sectional area (the cross-sectional area of the lattice portion that is parallel to the interface) of each part is 45 % and constant. That is, the ratios of cross-sectional areas of the lattice portions formed by the maraging steel and the spaces are the same, and the three-dimensional structural body in which the spaces extend spirally with respect to the end face of the first joining material is formed.

The first joining material and the three-dimensional structural body are preheated at 450 °C for two hours inside a furnace and then disposed in a metal mold. As the second joining material, an aluminum alloy (AC4C) is melted at 800 °C and poured and impregnated into the spaces of the three-dimensional structural body at a casting pressure of 100 MPa with solidification holding time of 8 minutes by high pressure casting. The obtained joint structure of dissimilar materials is then T4 heat treated (melting process at 500 °C for 4 hours → water quenching ---7 natural ageing). Then, a tensile test piece (having a diameter of 20 mm) is manufactured and its tensile strength is measured.

### (Working Example 4)

A round rod material of SKD61 (hot tool steel) having a diameter of 25 mm and a length of 105 mm is used as the first joining material. Maraging steel powder (powder diameter of 10 - 30 µm) is melted by laser and laminated onto an end face of the first joining material using a metal 3D additive machine (powder bed type by EOS) to form the three-dimensional structural body having a height of 10 mm as shown in FIG. 13A (the fourth embodiment). The cross-sectional area of the lattice portions in the vicinity of the interface is 80 % or more, and the cross-sectional area of the lattice portions at the top of the three-dimensional structural body is 30 % or less. That is, the three-dimensional structural body is formed such that the cross-sectional areas of the lattice portions made of maraging steel and the cross-sectional areas of the spaces decrease as being away from the first joining material.

The first joining material and the three-dimensional structural body are preheated at 450 °C for two hours inside a furnace and then disposed in a metal mold. As the second joining material, an aluminum alloy (AC4C) is melted at 800 °C and poured and impregnated into the spaces of the three-dimensional structural body at a casting pressure of 100 MPa with solidification holding time of 8 minutes by high pressure casting. The obtained joint structure of dissimilar materials is then T4 heat treated (melting process at 500 °C for 4 hours → water quenching ---7 natural ageing). Then, a tensile test piece (having a diameter of 20 mm) is manufactured and its tensile strength is measured.

### (Working Example 5)

A round rod material of DH2F (free-cutting hot tool steel) having a diameter of 25 mm and a length of 105 mm is used as the first joining material. Maraging steel powder (powder diameter of 10 - 30 µm) is melted by laser and laminated onto an end face of the first joining material using a metal 3D additive machine (powder bed type by Concept Laser) to form the three-dimensional structural body having a height of 10 mm as shown in FIG. 2A (the first embodiment). The cross-sectional area (the cross-sectional area of the lattice portion that is parallel to the interface) of each part is 45 % and constant. That is, the ratios of cross-sectional areas of the lattice portions formed by the maraging steel and the spaces are the same, and the three-dimensional structural body in which the spaces extend in a direction perpendicular to the end face of the first joining material is formed.

The first joining material and the three-dimensional structural body are preheated at 450 °C for two hours inside a furnace and then disposed in a metal mold. As the second joining material, an aluminum alloy (A2017) is melted at 800 °C and poured and impregnated into the spaces of the three-dimensional structural body at a casting pressure of 80 MPa with solidification holding time of 30 seconds by the die casting method. The obtained joint structure of dissimilar materials is then T4 heat treated (melting process at 500 °C for 4 hours → water quenching ---7 natural ageing). Then, a tensile test piece (having a diameter of 20 mm) is manufactured and its tensile strength is measured.

### (Working Example 6)

A round rod material of DH2F (free-cutting hot tool steel) having a diameter of 25 mm and a length of 105 mm is used as the first joining material. Maraging steel powder (powder diameter of 10 - 30 µm) is melted by laser and laminated onto an end face of the first joining material using a metal 3D additive machine (powder bed type by Concept Laser) to form the three-dimensional structural body having a height of 10 mm as shown in FIG. 2A (the first embodiment). The cross-sectional area (the cross-sectional area of the lattice portion that is parallel to the interface) of each part is 45 % and constant. That is, the ratios of cross-sectional areas of the lattice portions formed by the maraging steel and the spaces are the same, and the three-dimensional structural body in which the spaces extend in a direction perpendicular to the end face of the first joining material is formed.

The first joining material and the three-dimensional structural body are preheated at 350 °C for two hours inside a furnace and then disposed in a metal mold. As the second joining material, an aluminum alloy (A2017) is melted at 700 °C and poured and impregnated into the spaces of the three-dimensional structural body at a casting pressure of 100 MPa with solidification holding time of 8 minutes by high pressure casting. The obtained joint structure of dissimilar materials is then T4 heat treated (melting process at 500 °C for 4 hours → water quenching ---7 natural ageing). Then, a tensile test piece (having a diameter of 20 mm) is manufactured and its tensile strength is measured.

### (Comparison Example 1)

A round rod material of SKD61 (hot tool steel) having a diameter of 30 mm and a length of 105 mm is used as the first joining material. A dent portion (with a depth of 1 - 3 µm) is formed on an end face of the first joining material by etching method (NMT method or T solution). The joining material is then preheated at 450 °C for two hours inside a furnace and then disposed in a metal mold. As the second joining material, an aluminum alloy (A2017) is melted at 800 °C and poured and impregnated into the dent portion of the first joining material at a casting pressure of 100 MPa with solidification holding time of 8 minutes by high pressure casting. The obtained joint structure of dissimilar materials is then T4 heat treated in the same way as in the first and second working examples (melting process at 500 °C for 4 hours → water quenching → natural ageing). As a result, every test body breaks at the joint surface at the time of water quenching, and thus it is impossible to carry out the tensile test. The reaction layer is evaluated on the interface between the first joining material and the second joining material.

### (Comparison Example 2)

A round rod material of SKD61 (hot tool steel) having a diameter of 30 mm and a length of 105 mm is used as the first joining material. A dent portion (with a groove width of 10 - 20 µm and a groove depth of 100 - 500 µm) is formed on an end face of the first joining material by laser dimple method (DLAMP). The joining material is then preheated at 450 °C for two hours inside a furnace and then disposed in a metal mold. As the second joining material, an aluminum alloy (A2017) is melted at 800 °C and poured and impregnated into the dent portion of the first joining material at a casting pressure of 100 MPa with solidification holding time of 8 minutes by high pressure casting. The obtained joint structure of dissimilar materials is then T4 heat treated in the same way as in the first and second working examples (melting process at 500 °C for 4 hours → water quenching → natural ageing). As a result, most of the test bodies break at the joint surface at the time of water quenching. The tensile strength of each of the test pieces (with a diameter of 20 mm) made from the unbroken test bodies is measured. The reaction layer is evaluated on the interface between the first joining material and the second joining material.

### (Comparison Example 3)

A round rod material of DH2F (free-cutting hot tool steel) having a diameter of 30 mm and a length of 105 mm is used as the first joining material. A sprayed metal layer of Zn-SUS-Fe alloy (with a thickness of 10 - 30 µm) having a rough surface is formed on an end face of the first joining material by thermal spraying method. The joining material is then preheated at 450 °C for two hours inside a furnace and then disposed in a metal mold. As the second joining material, an aluminum alloy (AC4C) is melted at 800 °C and poured and impregnated into the rough surface of the first joining material at a casting pressure of 100 MPa with solidification holding time of 8 minutes by high pressure casting. The obtained joint structure of dissimilar materials is then T4 heat treated in the same way as in the first and second working examples (melting process at 500 °C for 4 hours → water quenching → natural ageing). As a result, every test body breaks at the joint surface at the time of water quenching, and thus it is impossible to carry out the tensile test. The reaction layer is evaluated on the interface between the first j oining material and the second joining material.

The results of the above are shown in Table 4.

**[Table 4]**

| | Joint Structure | Tensile Strength (MPa) | Casting Method | Size of Reaction Layer |
|---|---|---|---|---|
| Working Example 1 | Three-Dimensional Structural Body (Fixed cross-sectional area, Perpendicular) | 126 | High Pressure Casting | excellent |
| Working Example 2 | Three-Dimensional Structural Body (Fixed cross-sectional area, Inclined) | 132 | High Pressure Casting | excellent |
| Working Example 3 | Three-Dimensional Structural Body (Fixed cross-sectional area, Spiral) | 165 | High Pressure Casting | excellent |
| Working Example 4 | Three-Dimensional Structural Body (Gradation cross-sectional area) | 155 | High Pressure Casting | excellent |
| Working Example 5 | Three-Dimensional Structural Body (Fixed cross-sectional area, Perpendicular) | 110 | Die Casting | bad |
| Working Example 6 | Three-Dimensional Structural Body (Fixed cross-sectional area, Perpendicular) | 118 | High Pressure Casting | good |
| Comparison Example 1 | Etching | - | High Pressure Casting | bad |
| Comparison Example 2 | Laser Dimple | 40 | High Pressure Casting | average |
| Comparison Example 3 | Thermal Spray | - | High Pressure Casting | bad |

The results show that the joint structure using the three-dimensional structural body can have high tensile strength. In particular, with the constant cross-sectional areas, the tensile strength in the working example 2 in which the lattice direction of the three-dimensional structural body is inclined with respect to the joint surface is higher than the tensile strength in the working example 1 in which the lattice direction of the three-dimensional structural body is perpendicular to the joint surface. Also, the tensile strength increases further when the lattice direction of the three-dimensional structural body is in a spiral shape. Also, compared to the working examples 1 and 2, the higher tensile strength can be obtained in the working example 4 in which the cross-sectional area gradation portion is formed.

Also, in the working example 5, the die casting method is used and thus the reaction layer formed is less and the tensile strength is lower. With such the casting method where the metallurgical joint force becomes smaller, although the anchor effect of the beam structure of the three-dimensional structural body may increase the tensile strength to a certain extent, the tensile strength is lower than the working example 1 having the same structure with the larger reaction layer. As above, with the sufficient solidification holding time (a reaction layer forming holding time), the reaction layer can be formed, thereby increasing the tensile strength.

Also, although high pressure casting is used in the working example 6, the preheating temperature as well as the metal melting temperature are low, and the evaluation of the reaction layer is "good". Thus, compared to the working example 1 of the same structure, the metallurgical joint force is less and the tensile strength is slightly less than that of the working example 1.

On the other hand, in the comparison examples in which known uneven shapes are formed on the surfaces, most of the test bodies break at the time of quenching. This break is considered to be caused by the low bonding strength that cannot bear the stress due to thermal compression at the time of water quenching. Also, even if the break does not occur at the time of quenching, the bonding strength is substantially low. In each of the comparison examples, since the unevenness on the surface is small and the anchor effect is extremely small, no increase in the bonding strength due to strong anchor effect by beams, such as the three-dimensional structural body of the present invention, can be found.

Note that the reaction layers in the comparison examples are extremely smaller than the reaction layer in the working example 1 with the same casting condition. In the working example 1, the reaction layer is easily formed because the thin beam portions of the three-dimensional structural body are kept being wrapped by the molten metal for a long time at a high temperature. On the other hand, in the comparison example 1, the first joining material and the second joining material are in contact with each other at the interface, and heat of the interface is transferred to a side of the base material (the root) of the first joining material. It can be considered that the interface temperature cannot be held high, and thus the reaction is inhibited. All the results in the above examples are obtained after T4 treatment. However, similar tendency is shown with the other tempering treatments.

Although the embodiments of the present invention have been described referring to the attached drawings, the technical scope of the present invention is not limited to the embodiments described above. It is obvious that persons skilled in the art can think out various examples of changes or modifications within the scope of the technical idea disclosed in the claims, and it will be understood that they naturally belong to the technical scope of the present invention.

### DESCRIPTION OF NOTATIONS

- 1. 1a, 1b, 1c, 1d, 1e, 1f: joint structure of dissimilar metal materials
- 3: first joining material
- 5: second joining material
- 7, 7a, 7b, 7c, 7d, 7e, 7f: three-dimensional structural body
- 9a: lattice portion
- 9b: space
- 11: interface

## Claims

1. A joint structure of dissimilar metal materials comprising:
a first joining material that is made of metal;
a three-dimensional structural body that is made of metal, the three-dimensional structural body being joined to the first joining material and having spaces; and
a second joining material that is made of metal, the second joining material being filled into the spaces of the three-dimensional structural body; wherein
the first joining material and the second joining material are joined together via the three-dimensional structural body.

2. The joint structure of dissimilar metal materials according to claim 1, wherein
an intermetallic compound is formed on an interface between the three-dimensional structural body and the second joining material; and
by observing cross sections, a formation growth of the intermetallic compound is between 5 % and 60 % of a length of the interface between the three-dimensional structural body and the second joining material.

3. The joint structure of dissimilar metal materials according to claim 1, wherein
the three-dimensional structural body includes a cross-sectional area gradation portion, in which areas of cross-sections that are parallel to an interface between the three-dimensional structural body and the first joining material decrease as being away from the first joining material.

4. The joint structure of dissimilar metal materials according to claim 1, wherein
the three-dimensional structural body is formed on the interface between the three-dimensional structural body and the first joining material leaving almost no gaps; and
the spaces are formed at positions that are away from the first joining material.

5. The joint structure of dissimilar metal materials according to claim 1, wherein
the three-dimensional structural body is in a lattice form; and
at least a part of the spaces of the three-dimensional structural body are formed not in a continuous straight line direction that is perpendicular to a joint surface with the first joining material.

6. The joint structure of dissimilar metal materials according to claim 4, wherein
at least a part of the spaces of the three-dimensional structural body is formed in a direction that is inclined with respect to a joining direction with the first joining material.

7. The joint structure of dissimilar metal materials according to claim 4, wherein
at least a part of the spaces of the three-dimensional structural body is formed in a direction that is curved with respect to a joining direction with the first joining material.

8. A method for joining dissimilar materials, the method comprising:
a step (a) of forming a three-dimensional structural body that is made of metal onto a first joining material that is made of metal, the three-dimensional structural body having spaces; and
a step (b) of filling a second joining material that is made of metal into the spaces of the three-dimensional structural body by high pressure casting; wherein
the first joining material and the second joining material are joined together via the three-dimensional structural body.

9. The method for joining dissimilar materials according to claim 8, the method further comprising:
after filling the second joining material into a metal mold and before opening the mold, a step (c) of holding the mold for a reaction layer forming holding time for forming a reaction layer on an interface between the three-dimensional structural body and the second joining material.

10. The method for joining dissimilar materials according to claim 8, wherein
the three-dimensional structural body comprises a cross-sectional area gradation portion, in which areas of cross-sections that are parallel to an interface between the three-dimensional structural body and the first joining material decrease as being away from the first joining material.

11. The method for joining dissimilar materials according to claim 8, wherein
the three-dimensional structural body is in a lattice form; and
at least a part of the spaces of the three-dimensional structural body is not formed in a continuous straight line direction that is perpendicular to a joint surface with the first joining material.

12. The method for joining dissimilar materials according to claim 8, wherein
the three-dimensional structural body is formed by using a 3D printer.
